# EUROPEAN PATENT APPLICATION

(11) **EP 4 687 071 A2**
(43) Date of publication of application: **04.02.2026**
(21) Application number: 25193529.2
(22) Date of filing: 01.08.2025
(51) Int. Cl.: G06N 3/0475

(54) **ADVERSARIAL ROBUSTNESS VIA ENSEMBLING ACROSS INPUTS, MODELS, OR MODEL LAYERS**

(30) Priority: 01.08.2024 US 202463678285 P
(71) Applicant: GDM Holding LLC, Mountain View CA 94043 (US)
(72) Inventor: FORT, Stanislav, 8002 Zurich (CH); LAKSHMINARAYANAN, Balaji, Mountain View, 94043 (US)
(74) Representative: Marks & Clerk GST

(57) **Abstract**

Provided are systems and methods that enhance the adversarial robustness of machine learning models through the use of ensembling across input resolutions, models, and/or model layers. **In** particular, one aspect of the present disclosure is directed to the use of a multi-resolution input representation. The proposed multi-resolution input can be generated by transforming an input image into multiple resolutions and stacking these variations to enrich the model's input data. Additionally or alternatively to the multi-resolution approach, the present disclosure also provides ensemble aggregation methods that aggregate across multiple models and/or layers of a model. The ensemble aggregation methods can improve adversarial robustness by aggregating outputs from multiple models, model checkpoints, or even multiple intermediate layers from the same model in a manner that mitigates the influence of outlier predictions, such as de-correlated predictions generated by certain model(s) or by certain layer(s) of a model due to an adversarial attack.

## Description

### RELATED APPLICATIONS

This application claims priority to and the benefit of United States Provisional Patent Application Number 63/678,285, filed August 1, 2024. United States Provisional Patent Application Number 63/678,285 is hereby incorporated by reference in its entirety.

### FIELD

The present disclosure relates generally to machine learning. More particularly, the present disclosure relates to machine learning systems and methods that are robust against adversarial attacks.

### BACKGROUND

A computing system can receive input(s). The computing system can execute instructions to process the input(s) to generate output(s) using a parameterized model. For example, the input can be a query or a prompt and the output can be a response to the query or the prompt. The computing system can obtain feedback on its performance in generating the outputs with the model. For example, the computing system can generate feedback by evaluating its own performance and/or the computing system can receive feedback from an external source. The computing system can update parameters of the model based on the feedback to improve its performance. In this manner, the computing system can iteratively "learn" to generate the desired outputs. The resulting model is often referred to as a machine-learned model.

Neural networks are a specific type of machine learning model that employ one or more layers of nonlinear units to predict an output for a received input. Some neural networks include one or more hidden layers in addition to an output layer. The output of each hidden layer is used as input to the next layer in the network, e.g., the next hidden layer or the output layer. Each layer of the network generates an output from a received input in accordance with current values of a respective set of parameters.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a computer-implemented method for improved robustness against adversarial attacks. The computer-implemented method includes obtaining, by a computing system may include one or more computing devices, an input image, where the input image may include a first tensor of image data having first and second values for first and second spatial dimensions and a third value for a channel dimension. The method also includes generating, by the computing system, a second tensor of image data from the input image, where the second tensor of image data has the first and second values for the first and second spatial dimensions and a fourth value for the channel dimension, where the fourth value is greater than the third value. Generating the second tensor of image data may include: generating, by the computing system, one or more augmented versions of the input image; and stacking, by the computing system, the one or more augmented versions of the input image in the channel dimension. The method also includes processing, by the computing system, the second tensor of image data with a machine-learned model to generate an output from the machine-learned model. Other embodiments of this aspect include corresponding computer systems, apparatus, and computer programs recorded on one or more computer storage devices, each configured to perform the actions of the methods.

Some example implementations may include any combination of one or more of the following features. The computer-implemented method where stacking, by the computing system, the one or more augmented versions of the input image in the channel dimension may include appending, by the computing system, the one or more augmented versions of the input image to the first tensor of image data along the channel dimension. Generating, by the computing system, the one or more augmented versions of the input image may include generating, by the computing system, one or more degraded versions of the input image. Generating, by the computing system, the one or more degraded versions of the input image may include: decreasing, by the computing system, a resolution of the input image to generate a reduced-resolution version of the input image; and rescaling, by the computing system, the reduced-resolution version of the input image to have the first and second values for the first and second spatial dimensions. Generating, by the computing system, the one or more degraded versions of the input image may include iteratively decreasing, by the computing system, a resolution of the input image and rescaling the result for a plurality of steps to generate a plurality of progressively-degraded versions of the input image. Generating, by the computing system, the one or more degraded versions of the input image may include blurring, by the computing system, the input image. Generating, by the computing system, the one or more degraded versions of the input image may include adding, by the computing system, stochastic noise to the input image. Generating, by the computing system, the one or more degraded versions of the input image may include adding, by the computing system, stochastic jitter to the input image. Generating, by the computing system, the one or more degraded versions of the input image may include adding, by the computing system, a random change in contrast to the input image. Generating, by the computing system, the one or more degraded versions of the input image may include adding, by the computing system, a random shift in color-grayscale to the input image. The second tensor of image data may exclude the first tensor of image data such that the original input image is not included in the second tensor of image data. Implementations of the described techniques may include hardware, a method or process, or computer software on a computer-accessible medium.

In some implementations, the robustness of the machine-learned model is improved relative to the same model processing only the original input image, as measured by a lower classification error rate on a standardized adversarial attack benchmark. In some implementations, the augmented versions of the input image comprise transformations that preserve the semantic content of the input image, such as changes in resolution, blur, noise, jitter, contrast, or color balance. In some implementations, a degraded version of the input image may be one in which a visual quality metric, such as image resolution or signal-to-noise ratio, has been reduced relative to the original input image. In some implementations, the plurality of progressively-degraded versions are generated such that each subsequent version in the sequence has a lower resolution than the preceding version. In some implementations, the stochastic noise may be drawn from a Gaussian distribution having a standard deviation of 0.1 on a normalized pixel value scale of 0.0 to 1.0, and the stochastic jitter may comprise a random spatial shift in a range of plus or minus three pixels in the x- and y-dimensions.

Another general aspect includes a computing system with improved robustness against adversarial attacks. The computing system also includes one or more processors. The system also includes one or more non-transitory computer-readable media that collectively store instructions that, when executed by the one or more processors, cause the computing system to perform operations. The operations may include obtaining a plurality of first sets of scores respectively generated by a plurality of machine-learned models for an input, where each first set of scores may include a plurality of values respectively for a plurality of classes. The operations also include subtracting, from each first set of scores on a per-model basis, a respective maximum score value from that first set of scores to obtain a plurality of second sets of scores. The operations also include subtracting, from all of the second set of scores on a per-class basis, a respective maximum score value from all of the second set of scores for that class to obtain a plurality of third sets of scores. The operations also include generating an output set of scores from the plurality of third sets of scores. The operations also include generating an ensemble prediction based on the output set of scores. Other embodiments of this aspect include corresponding computer systems, apparatus, and computer programs recorded on one or more computer storage devices, each configured to perform the actions of the methods.

Some example implementations may include any combination of one or more of the following features. The computing system where each of the sets of scores may include logit scores. Generating the output set of scores from the plurality of third sets of scores may include selecting, on a per-class basis, a median score value for each class from all of the third sets of scores for inclusion in the output set of scores. The input may include the second tensor of image data described elsewhere herein. The plurality of machine-learned models may include a plurality of different checkpoints of a machine-learned model. Generating the output set of scores from the plurality of third sets of scores may include selecting, on a per-class basis, a k-th highest score value for each class from all of the third sets of scores for inclusion in the output set of scores. The k-th highest score value may include the second highest score value. Implementations of the described techniques may include hardware, a method or process, or computer software on a computer-accessible medium.

In some implementations, the robustness of the machine-learned model is improved relative to the same model processing only the original input image, as measured by a lower classification error rate on a standardized adversarial attack benchmark. In some implementations, generating the ensemble prediction may comprise applying a softmax function to the output set of scores to generate a probability distribution over the plurality of classes, and selecting the class with the highest probability as the ensemble prediction.

One general aspect includes one or more non-transitory computer-readable media that collectively store computer-readable instructions for performing computer operations. The one or more non - transitory computer - readable media also includes instructions for obtaining a plurality of first sets of scores respectively generated for an input by a plurality of intermediate layers of a shared machine-learned model, where each first set of scores may include a plurality of values respectively for a plurality of classes. The media also includes instructions for aggregating the plurality of first sets of scores to generate an output set of scores. The media also includes generating a self-ensemble prediction based on the output set of scores. Other embodiments of this aspect include corresponding computer systems, apparatus, and computer programs recorded on one or more computer storage devices, each configured to perform the actions of the methods.

Some example implementations may include any combination of one or more of the following features. The one or more non-transitory computer-readable media where aggregating the plurality of first sets of scores to generate an output set of scores may include: subtracting, from each first set of scores on a per-model basis, a respective maximum score value from that first set of scores to obtain a plurality of second sets of scores; subtracting, from all of the second set of scores on a per-class basis, a respective maximum score value from all of the second set of scores for that class to obtain a plurality of third sets of scores; generating an output set of scores from the plurality of third sets of scores. Generating the output set of scores from the plurality of third sets of scores may include selecting, on a per-class basis, a median score value for each class from all of the third sets of scores for inclusion in the output set of scores. The input may include the second tensor of image data described elsewhere herein. The plurality of first sets of scores may include a plurality of sets of logit scores generated by respective linear probes and where the output set of scores may include a set of logit scores. Generating the output set of scores from the plurality of third sets of scores may include selecting, on a per-class basis, a k-th highest score value for each class from all of the third sets of scores for inclusion in the output set of scores. The k-th highest score value may include the second highest score value. Implementations of the described techniques may include hardware, a method or process, or computer software on a computer-accessible medium.

In some implementations, the plurality of intermediate layers may comprise all layers of the shared machine-learned model that are situated between an input layer and a final output layer, or a pre-defined subset thereof. In some implementations, aggregating the plurality of first sets of scores may comprise performing a CrossMax aggregation, a majority vote, or taking a mean or median of the scores on a per-class basis. In some implementations, generating the self-ensemble prediction may comprise applying a softmax function to the output set of scores to generate a probability distribution over the plurality of classes, and selecting the class with the highest probability as the self-ensemble prediction.

Example implementations of the systems and methods described herein are described in the Appendix to United States Provisional Patent Application Number 63/678,285.

### BRIEF DESCRIPTION OF THE DRAWINGS

Detailed discussion of embodiments directed to one of ordinary skill in the art is set forth in the specification, which makes reference to the appended figures, in which:
Figure 1 depicts a block diagram of an example approach that includes generating an augmented image stack from an input image according to example embodiments of the present disclosure.
Figure 2 depicts a block diagram of an example approach that includes performing model ensembling according to example embodiments of the present disclosure.
Figure 3 depicts a block diagram of an example approach that includes performing self-ensembling across intermediate layers of a model according to example embodiments of the present disclosure.
Figure 4 depicts a block diagram of an example approach that includes performing self-ensembling across intermediate layers of a model according to example embodiments of the present disclosure.
Figure 5A depicts a block diagram of an example computing system according to example embodiments of the present disclosure.
Figure 5B depicts a block diagram of an example computing device according to example embodiments of the present disclosure.
Figure 5C depicts a block diagram of an example computing device according to example embodiments of the present disclosure.

Reference numerals that are repeated across plural figures are intended to identify the same features in various implementations.

### DETAILED DESCRIPTION

Adversarial attacks in machine learning are deliberate manipulations of input data intended to deceive models into making incorrect decisions, predictions, or other outputs (e.g., incorrect classifications). These attacks exploit vulnerabilities in the algorithms by introducing subtle, often humanly-imperceptible, perturbations to the input-such as images, audio, or text-that lead the model to misclassify or misinterpret the data. For example, in image recognition, an adversarially-altered image might still appear normal to human observers but could cause the model to label it incorrectly. This poses significant challenges in ensuring the security and reliability of machine learning systems, especially in real-world applications where accuracy and trustworthiness are of high importance.

In view of the above technical challenge, the present disclosure provides systems and methods that enhance the adversarial robustness of machine learning models through the use of ensembling across input resolutions, models, and/or model layers. In particular, one aspect of the present disclosure is directed to the use of a multi-resolution input representation. The proposed multi-resolution input can be generated by transforming an input image into multiple resolutions and stacking these variations to enrich the model's input data. Additionally or alternatively to the multi-resolution approach, the present disclosure also provides ensemble aggregation methods that aggregate across multiple models and/or layers of a model. The ensemble aggregation methods can improve adversarial robustness by aggregating outputs from multiple models, model checkpoints, or even multiple intermediate layers from the same model in a manner that mitigates the influence of outlier predictions, such as de-correlated predictions generated by certain model(s) or by certain layer(s) of a model due to an adversarial attack.

More particularly, one aspect of the present disclosure is directed to enhancing the robustness of machine learning models against adversarial attacks through the transformation of an input image into a stack of augmented images. For example, the stack of augmented images may be versions of the input image that have been transformed into a different (e.g., smaller) resolution and then rescaled and/or had other augmentation(s) performed. This technique effectively increases the complexity and diversity of the data that the model processes, representing an ensembling approach performed across different variants of the input image. Thus, by transforming an input image into multiple augmented variants, and then stacking these variations along the channel dimension, the model is exposed to a more diverse set of features.

**In** particular, in some implementations, a computing system can obtain an input image, which may be represented using a first tensor that has certain spatial and channel dimensions. The computing system can generate a second tensor of image data from this input. The second tensor can have a greater channel dimension than the original, achieved by generating and stacking augmented versions of the input image along the channel dimension. The computing system can then process this second tensor with a machine-learned model to produce an output (e.g., a classification output). This approach leverages the increased data complexity and diversity of the second tensor to improve the model's resilience against adversarially-altered inputs designed to deceive or disrupt the model's predictive accuracy.

In some implementations, the augmented versions of the input image are appended to the original image data along the channel dimension. Alternatively, the original input image may be excluded from the stack of augmented images. This second approach focuses solely on the augmented versions, which can be particularly useful in reducing the model's dependency on the original clean and high-resolution data.

The computing system can generate the augmented versions of the input image in a number of different ways. Specifically, some example implementations of the present disclosure can generate degraded versions of the input image by reducing its resolution and then rescaling it back to the original dimensions. This process can be performed progressively (e.g., iteratively) and/or in parallel. Additionally or alternatively, the computing system can add random variations such as noise, jitter, changes in contrast, or shifts in color-grayscale balance to the input images. Other augmentation operations are possible as well.

To provide a particular example, a computing system can obtain an input image (X) with a full resolution of (*R* × *R*) and 3 color channels (e.g., RGB). The computing system can transform the input image into a series of degraded variations at certain resolutions, for example the resolutions specified by an example set (*p* = {32, 16, 8, 4}). Each variation is downsampled to the respective resolution and then rescaled back to the original dimensions (*R* × *R*), resulting in a multi-channel image ({*X̅*}) where each of a number of subsets of the channels represents a different resolution level, effectively expanding the original channel dimension by a factor of the number of resolutions used, (*c*|*p*|), where c represents the number of channels contained in the input image. The augmented image stack can be further enhanced by adding random noise, applying a random jitter in the x-y plane, introducing slight random changes in contrast, and/or adjusting the color-grayscale balance slightly. These augmentations can be applied both during the downsampling process and/or once the images are rescaled to full resolution.

For example, the stochastic jitter may comprise a random spatial shift within a range of plus or minus three pixels. In some implementations, the stochastic noise can be implemented by adding noise with a standard deviation of 0.1 on a normalized scale. In some implementations in which the machine-learned model expects a different input size than the original image, each of the degraded versions can be rescaled using a standard interpolation method, such as bicubic interpolation.

In some respects, the generation of the augmented image stack is inspired by biological visual processes, particularly the microsaccades observed in human and other mammalian vision systems. Microsaccades are small, involuntary, and rapid movements of the eye that occur naturally when humans or animals fix their gaze on a point. These movements help refresh the visual scene on the retina, preventing the visual perception from fading and enhancing the detection of fine spatial details. Similar to this biological phenomenon, the disclosed method incorporates stochastic jitter and noise into the augmented versions of the input image, thereby simulating the dynamic visual input received by biological vision systems. This bio-inspired approach not only enriches the dataset processed by the machine learning model but also contributes to the robustness of the model against adversarial attacks by increasing the complexity and variability of the input data.

Another aspect of the present disclosure is directed to the aggregation of predictions from multiple models, model checkpoints, and/or intermediate layers of a model. One specific aggregation technique proposed herein can be referred to as CrossMax. The CrossMax method can include subtracting the maximum score value from each set of scores on a per-model first, and on a per-class basis second. Further, in some implementations, the CrossMax method selects a median score or a k-th highest score for each class from an adjusted sets of scores. This approach helps in mitigating the influence of outlier predictions and can be particularly effective in ensemble learning scenarios where multiple models' predictions are combined to improve the overall accuracy and reliability of the system. For example, the proposed approach reduces the likelihood that the final prediction is overly influenced by any extreme values.

In addition or alternatively to ensembling across different models, some example implementations can perform ensembling across intermediate layer predictions from the same, shared machine-learned model to enhance robustness. In particular, example implementations of the present disclosure recognize and leverage the insight that successful adversarial attacks on a machine-learned model do not necessarily compromise the integrity of the model's intermediate layer features. For instance, when an image of a dog is manipulated through an adversarial attack to be classified erroneously by a model as a car, the intermediate layer features of the model still predominantly recognize and represent it as a dog.

As such, by evaluating the predictions from various layers of the model, example implementations of the present disclosure are able to capture different levels of abstraction in the data, which can be combined to improve the overall decision-making process. In particular, in some implementations, the present disclosure facilitates the generation of self-ensemble predictions by aggregating outputs from different intermediate layers of a model. As one example, the outputs from the different intermediate layers of the model can be aggregated using the CrossMax technique proposed herein. Other aggregation techniques are possible as well. This approach leverages the diversity in the representations captured by various layers.

Thus, some example implementations of the present disclosure leverage the resilience of intermediate layer features against complete deception by adversarial attacks to enhance the robustness of classifiers. Specifically, some example implementations can include separate output heads (e.g., classifiers referred to as linear probes) on the activations of each intermediate layer of a primary model (e.g., a model "backbone"). By doing so, each intermediate layer's ability to independently recognize features can be harnessed.

During operation, when an input is processed, it is not only evaluated by the final layer of the model but also concurrently by these intermediate classifiers. The outputs from these intermediate classifiers can then be aggregated to form a composite prediction. This aggregation can be achieved using robust ensemble techniques, such as, for example, the CrossMax method described herein. This method reduces the likelihood that the final prediction is overly influenced by any extreme values that might be the result of an adversarial attack aimed at deceiving the final layer's output. By integrating the predictions from multiple layers, the system leverages the retained accuracy of intermediate layers to enhance overall model robustness against adversarial attacks.

Another aspect of the present disclosure is directed to the use of multiple resolutions as an interpretability prior. Specifically, this multi-resolution prior enables a novel application where classifiers can be transitioned into image generators. This transformation can be facilitated by expressing an adversarial attack as a sum of perturbations across different resolutions and using optimization techniques (e.g., backpropagation) to update the perturbations to find "optimal" attacks. Traditionally, adversarial attacks on classifiers result in images that are noise-like and non-interpretable. However, by applying the multi-resolution approach, the resulting images are human-interpretable and adhere more closely to the spectral properties of natural images.

This method can be applied to both pretrained classifiers and embedding models (e.g., the CLIP model), effectively turning them into controllable image generators. By constructing adversarial attacks targeted towards specific labels or text embeddings, it is possible to guide the image generation process. This approach leverages the inherent capabilities of the classifiers and embedding models, utilizing their trained features to generate images that are not only interpretable but also relevant to the specified targets.

Overall, the techniques outlined in the present disclosure provide a framework for enhancing the robustness and reliability of machine learning models against adversarial attacks. By incorporating ensembling across augmented inputs, model outputs, and/or model layer outputs, the disclosed methods not only improve the performance of the model(s) against adversarial attacks but also make them more adaptable to different applications and conditions. This can lead to broader adoption of machine learning technologies in critical areas such as healthcare, security, and autonomous systems, where robustness and reliability are paramount.

Another aspect of the present disclosure is directed to the use of the generated human-interpretable perturbations as a diagnostic tool for evaluating the robustness of external, third-party machine-learned models. Because the multi-resolution prior produces alterations that are semantically meaningful to human observers, these alterations can be used to create a suite of test cases for probing the perceptual and reasoning capabilities of other models, including those to which the computing system has no internal access (e.g., black-box models). This provides a method for systematically assessing how different models interpret structured, meaningful changes to an input, thereby facilitating a deeper understanding of their operational characteristics and potential failure modes.

In some implementations, this cross-model evaluation can be performed by first using a source model, such as a classifier or an embedding model, to generate an altered image by optimizing perturbations toward a target concept, as described elsewhere herein. This altered image, which contains human-interpretable features of the target concept, can then be provided as input to a second, distinct target model. The output of the target model can be analyzed to determine if it perceives the same target concept. The degree to which the target model's output aligns with the intended perturbation provides a measure of the perceptual alignment and shared vulnerabilities between the source and target models.

This technique may be valuable for the analysis and debugging of large-scale systems, such as vision-language models (VLMs), where direct inspection of model parameters is often infeasible. By providing a method to generate transferable and interpretable test inputs, developers and researchers can effectively probe these complex systems for unexpected behaviors or systemic weaknesses. The ability to identify such vulnerabilities is an important step in the development lifecycle, enabling the improvement of model safety, reliability, and overall alignment with human perception and intent. This contributes to the creation of more robust and trustworthy machine learning systems across the ecosystem.

The systems and methods of the present disclosure provide a number of technical effects and benefits. In particular, the proposed techniques address the technical problem of vulnerability of machine learning models to adversarial attacks. In one aspect, the proposed techniques provide a technical solution to this problem by transforming input data (e.g., images) into a format that enhances the robustness of the machine learning models against such adversarial attacks. This transformation can include generating multiple augmented versions of the input data at different resolutions and with various types of controlled degradation (e.g., noise addition, resolution reduction). This is a substantial alteration in how the data is presented to the learning model and results in improved robustness of the model against adversarial attacks.

In another aspect, the proposed techniques provide a technical solution to the problem of adversarial attacks by aggregating predictions from multiple models or multiple layers within a single model. Specifically, example implementations effectively mitigate the influence of outlier predictions that could be the result of adversarial attacks by performing various aggregation techniques. This reduces the likelihood that the final prediction is disproportionately influenced by any single erroneous prediction, thereby enhancing the overall reliability and robustness of the system.

Furthermore, prior approaches to mitigating adversarial attacks in machine learning models often relied on extensive adversarial training techniques, such as adversarial retraining or robust optimization. These methods typically involve repeatedly adjusting the model's parameters by exposing it to a large number of adversarial examples during the training phase. This process is computationally intensive as it requires generating adversarial examples and retraining the model iteratively, which consumes significant computational resources and time.

In contrast, the proposed techniques do not necessitate extensive training or retraining of the model to enhance robustness against adversarial attacks. The techniques primarily involve transforming the input data into multiple resolutions and/or employing ensemble aggregation methods like CrossMax, which do not require the extensive generation of adversarial examples or iterative retraining. In some cases, only minimal training of new linear probes for intermediate layers is performed, which is considerably less computationally demanding compared to full model retraining.

Therefore, the proposed techniques offer the technical benefit of achieving increased robustness against adversarial attacks with relatively lower computational expenditure. This efficiency is particularly advantageous in scenarios where computational resources are limited or when rapid deployment of robust models is required.

The disclosed technology can enhance machine learning models across various applications or use cases by improving their robustness against adversarial attacks. In healthcare diagnostics, a model can process medical images to accurately diagnose diseases. For autonomous vehicles, a model can process sensor data to make perceptual inferences and/or driving decisions. For spam and malware detection in cybersecurity, a model can process emails or files to detect malicious content. In manufacturing quality control, a model can process product images to detect defects. In climate or weather modeling, a model can process environmental data to predict changes to climate or weather. Lastly, in e-commerce or information retrieval, a model can process user data and/or queries to generate accurate product recommendations and/or search results. The proposed techniques can improve the robustness of any of these models against adversarial attacks.

With reference now to the Figures, example embodiments of the present disclosure will be discussed in further detail.

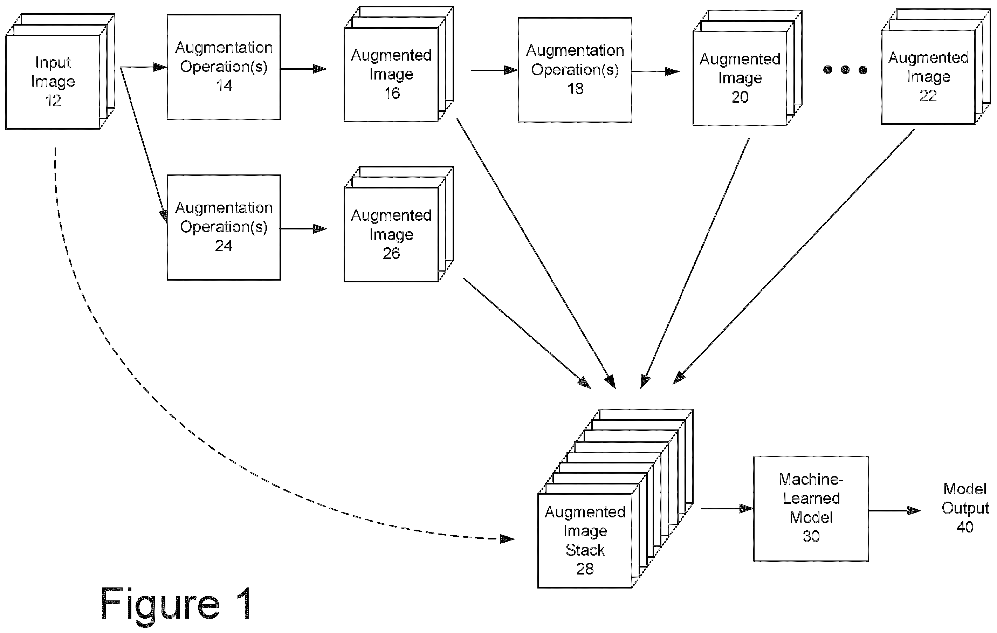

Figure 1 illustrates an approach for improving robustness against adversarial attacks. An input image 12, which comprises a first tensor of image data, is obtained by a computing system. The computing system can perform one or more augmentation operations on the input image to generate one or more augmented versions of the input image. These operations are represented by reference numbers 14, 18, and 24.

Each augmentation operation can generate an augmented image, as indicated by reference numbers 16, 20, 22, and 26. In some implementations, the augmented images can be generated by degrading the input image 12 in various ways.

More particularly, various augmentation operations can be employed to enhance the robustness of machine learning models against adversarial attacks. These operations can include, but are not limited to, reducing the resolution of the input image, adding stochastic noise of varying intensities and distributions, introducing stochastic jitter in the spatial dimensions, applying random shifts in the color-grayscale balance, modifying contrast levels randomly, blurring the image using different kernel sizes and types, rotating the image by random angles, flipping the image horizontally or vertically, cropping parts of the image randomly, adjusting the brightness levels, altering the saturation, transforming the image through perspective changes, and/or applying various filtering techniques such as edge enhancement or sharpening. Each of these operations can be applied alone or in combination, and the parameters of these operations can be varied to generate a wide range of augmented images, thereby increasing the diversity of data presented to the machine learning model.

The augmentation of the input image can be executed progressively and/or in parallel, as illustrated. For example, the top row of augmentations demonstrates a progressive approach, where each augmented image undergoes further augmentation operations sequentially. This sequence is shown as the input image 12 first undergoing an augmentation operation 14 to produce augmented image 16, which is then further processed by augmentation operation 18 to yield augmented image 20, and so forth. In contrast, the two different rows of augmentations indicate a parallel method of processing. Here, the original input image 12 is independently subjected to different augmentation operations 14 and 24, leading to the creation of different augmented images 16 and 26 simultaneously. This parallel processing allows for diverse variations of the input image to be generated concurrently.

In some implementations of the method illustrated in Figure 1, the original input image 12 can be included in the augmented image stack 28 along with the augmented versions of the input image. This inclusion can provide a reference of the original image data for the machine-learned model 30 during processing. In other implementations, the augmented image stack 28 may exclude the original input image 12, focusing solely on the augmented versions. This approach can be particularly useful in reducing the model's dependency on the original, clean, and high-resolution data, potentially enhancing its ability to generalize from modified or degraded inputs. Both approaches aim to improve the robustness of the model against adversarial attacks by varying the complexity and diversity of the input data processed.

Referring still to Figure 1, each augmented version of the input image can be stacked in the channel dimension to form a second tensor of image data, represented by the augmented image stack 28. The second tensor of image data is then processed by a machine-learned model, indicated by reference number 30. For example, the model 30 can be modified to have an initial input layer (e.g., convolutional layer) that matches the dimensions of the stack 28. The processing of the stack 28 by the machine-learned model 30 can generate an output, shown as model output 40. This output can be a classification or other type of model output. The method depicted in Figure 1 enhances the resilience of the model 30 against adversarially altered inputs by using a diversified set of augmented images.

In some implementations, the machine-learned model 30 can be a pre-trained convolutional neural network, such as a ResNet or Vision Transformer (ViT) architecture. In some implementations, to process the second tensor of image data, only the first convolutional layer of the pre-trained model may be replaced or modified to accept the fourth value for the channel dimension, while the remaining parameters of the model backbone can be kept frozen or finetuned. In some implementations where the input image has a different resolution than the expected input resolution of the pre-trained model (e.g., an input image of 32x32 for a model expecting 224x224), each channel of the second tensor of image data 28 may be independently up-sampled using an interpolation method, such as bicubic interpolation, before being processed by the model 30.

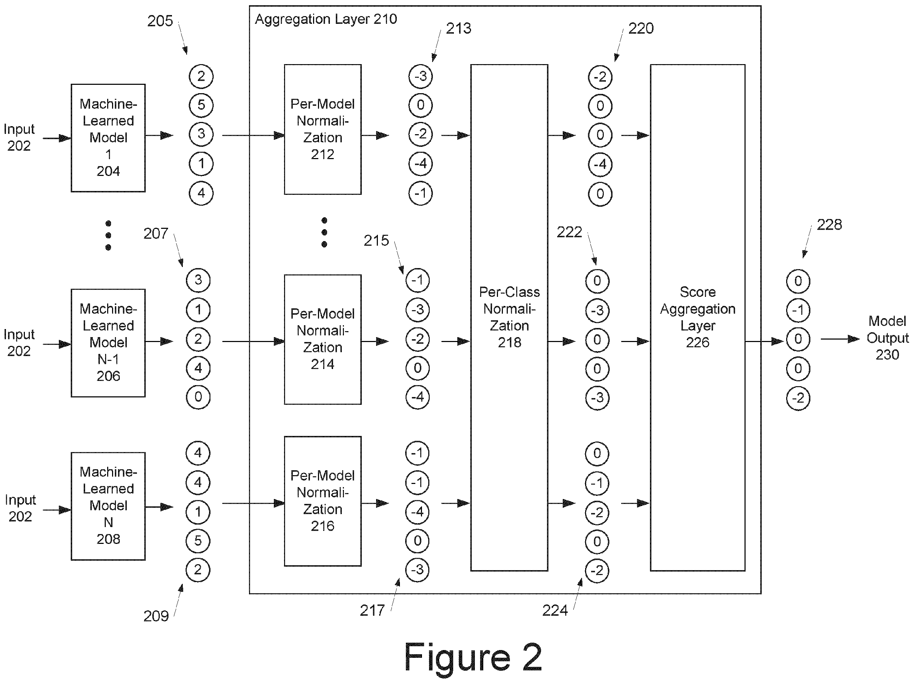

Figure 2 illustrates a computing system designed to enhance robustness against adversarial attacks through the use of multiple machine-learned models and score normalization techniques. The system can obtain input data, represented as input 202, which can be processed by a plurality of machine-learned models, such as machine-learned model 1 204, machine-learned model n-1 206, and machine-learned model n 208. Each model can generate a first set of scores based on the input data, respectively shown at 205, 207, and 209.

In the depicted system of figure 2, the machine-learned models 204, 206, and 208 can represent various configurations to enhance the robustness and versatility of the system. These models can be entirely distinct models, each designed with unique architectures or optimization strategies. Alternatively, they can be different instantiations of the same model type, optionally differentiated by varying initialization parameters or training data subsets. Additionally, models 204, 206, and 208 can also be different training checkpoints from the same model, capturing the model's state at various stages of its training process. Other combinations of model configurations can also be employed, depending on specific requirements and operational contexts.

In the depicted computing system, the first sets of scores 205, 207, and 209 generated by the machine-learned models, such as machine-learned model 1 204, machine-learned model n-1 206, and machine-learned model n 208, can be logit scores or other types of model outputs. Logit scores, which are the raw output values from the models before applying an activation function like softmax, are commonly used in classification tasks to represent the confidence level of each class prediction. Alternatively, these scores could also be probabilities or other forms of outputs depending on the specific implementation and requirements of the system. This flexibility allows the system to be adapted to various types of machine learning models and applications.

Referring still to figure 2, the first sets of scores 205, 207, and 209 can be forwarded to an aggregation layer 210, where each set 205, 207, and 209 undergoes a respective per-model normalization process 212, 214, 216. In this normalization step, a respective maximum score value can be subtracted from each first set of scores 205, 207, and 209 on a per-model basis to obtain a plurality of second sets of scores 213, 215, and 217.

Following per-model normalization, the second sets of scores 213, 215, and 217 can be subjected to per-class normalization 218 within the same aggregation layer 210. Here, a respective maximum score value can be subtracted from all the second sets of scores 213, 215, and 217 on a per-class basis to obtain a plurality of third sets of scores 220, 222, and 224.

The third sets of scores 220, 222, and 224 can be aggregated in the score aggregation layer 226. This aggregation can involve selecting a median score value or a k-th highest score value for each class from all the third sets of scores 220, 222, and 224. The selection between using a median score value and a k-th highest score value can be determined based on the nature of the ensemble members. For instance, when aggregating scores from models of equivalent quality, such as different training checkpoints, the median score may be used. In contrast, for a self-ensemble across intermediate layers of a single model where layer outputs may have varying quality, selecting the k-th highest score (e.g., the second or third highest) can provide a more robust aggregation by mitigating the influence of less reliable predictions from early layers. The value k can be treated as a hyperparameter. The selected scores can constitute an output set of scores 228.

The output set of scores 228 can be used to generate an ensemble prediction, depicted as model output 230. For example, the output set of scores 228 can be logit scores. These logit scores represent the unnormalized log probabilities associated with each class. The model output 230 can be generated by first applying a softmax function to these logit scores. The softmax function converts the logit scores into probabilities by normalizing them across the classes. Subsequently, classification logic can be applied to these probabilities to determine the most likely class for the given input. This ensemble prediction can be based on the aggregated scores and can provide improved robustness against adversarial attacks by mitigating the influence of outlier predictions both on a per-model and a per-class basis.

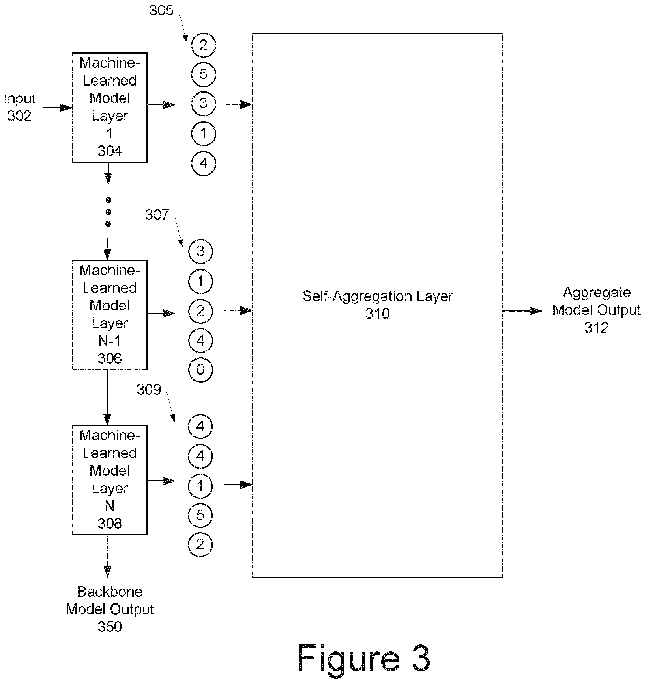

Figure 3 illustrates a schematic diagram of an example self-ensembling method for a machine-learned model. An input 302 can be processed through multiple layers of the machine-learned model, including machine-learned model layer 1 304, machine-learned model layer n-1 306, and machine-learned model layer n 308. Each layer can generate a first set of scores 305, 307, and 309, respectively. Each of first set of scores 305, 307, and 309 comprises values for various classes.

These first sets of scores 305, 307, and 309 are then conveyed to a self-aggregation layer 310. In this layer, scores from different layers can be aggregated to generate an aggregate model output 312, which is then used to generate a self-ensemble prediction.

The self-aggregation layer 310 depicted in figure 3 can employ various aggregation techniques to combine the scores 305, 307, and 309 from different layers of the machine-learned model. One such technique is the CrossMax method, which involves subtracting the maximum score value per-model and then per-class to mitigate the impact of outlier predictions. Another technique is the majority vote, where the class with the highest frequency of predictions across different layers is selected. Taking the median score for each class is also a possible approach, providing a balance point that is less affected by extreme values in the data.

Additional aggregation techniques can include taking the mean of scores, which averages the predictions across different layers, or using a weighted average where certain layers are given more influence based on their reliability or relevance. The minimum or maximum score for each class can also be used, selecting the least or most confident predictions, respectively. More sophisticated methods might involve applying machine learning algorithms within the aggregation layer itself to learn the optimal way to combine layer outputs based on historical performance. Techniques such as Bayesian model averaging or ensemble learning methods like stacking can also be utilized, where predictions from different layers are used as inputs to a secondary model that learns to predict the final output more accurately. Each of these techniques can be tailored to specific types of data or particular requirements of robustness and accuracy in the model's application.

In a production environment, the system can utilize the aggregate model output 312 directly to make predictions or decisions based on the aggregated scores from multiple layers of the machine-learned model. Alternatively, the system can use the backbone model output 350, which represents the final prediction of the model without self-ensembling. Additionally, the system can compare the aggregate model output 312 and the backbone model output 350 to assess discrepancies between them. Such discrepancies can be indicative of potential adversarial attacks, allowing the system to implement additional checks or measures to verify the integrity of the input data. This comparison can enhance the system's robustness by providing a mechanism to detect and respond to adversarial manipulations that may aim to deceive the model's predictive capabilities.

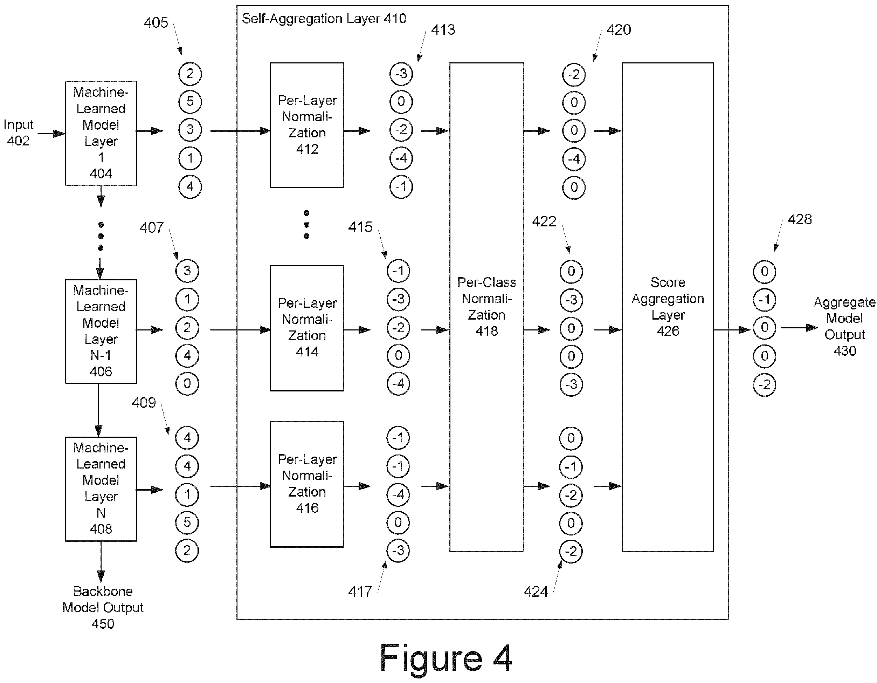

Figure 4 illustrates a schematic diagram of a self-ensembling method incorporating the CrossMax technique for a machine-learned model. The process begins with an input 402, which can be processed through various layers of the machine-learned model, including machine-learned model layer 1 404, machine-learned model layer n-1 406, and machine-learned model layer n 408. Each layer can generate a first set of scores 405, 407, and 409, respectively.

These first sets of scores 405, 407, and 409 are then conveyed to a self-aggregation layer 410. In this layer, each set of scores 405, 407, and 409 respectively undergoes a per-layer normalization 412, 414, 416, where the maximum score value is subtracted from each set on a per-layer basis to form second sets of scores 413, 415, 417. These second sets of scores 413, 415, 417 are then subjected to per-class normalization 418, where the maximum score value is subtracted from all second sets of scores 413, 415, 417 on a per-class basis to form third sets of scores 420, 422, and 424.

The third sets of scores 420, 422, and 424 are forwarded to a score aggregation layer 426. In this layer, an output set of scores 428 is generated by selecting a median score value or a k-th highest score value for each class from all the third sets of scores 420, 422, and 424. The selected scores 428 can be used to generate an aggregate model output 430. For example, the output scores 428 may be logit scores and the aggregate model output 430 may be a classification output generated by applying a Softmax function and/or classification logic onto the logit scores.

In a production environment, the system can utilize the aggregate model output 430 directly to make predictions or decisions based on the aggregated scores from multiple layers of the machine-learned model. Alternatively, the system can use the backbone model output 450, which represents the final prediction of the model without self-ensembling. Additionally, the system can compare the aggregate model output 430 and the backbone model output 450 to assess discrepancies between them. Such discrepancies can be indicative of potential adversarial attacks, allowing the system to implement additional checks or measures to verify the integrity of the input data. This comparison can enhance the system's robustness by providing a mechanism to detect and respond to adversarial manipulations that may aim to deceive the model's predictive capabilities.

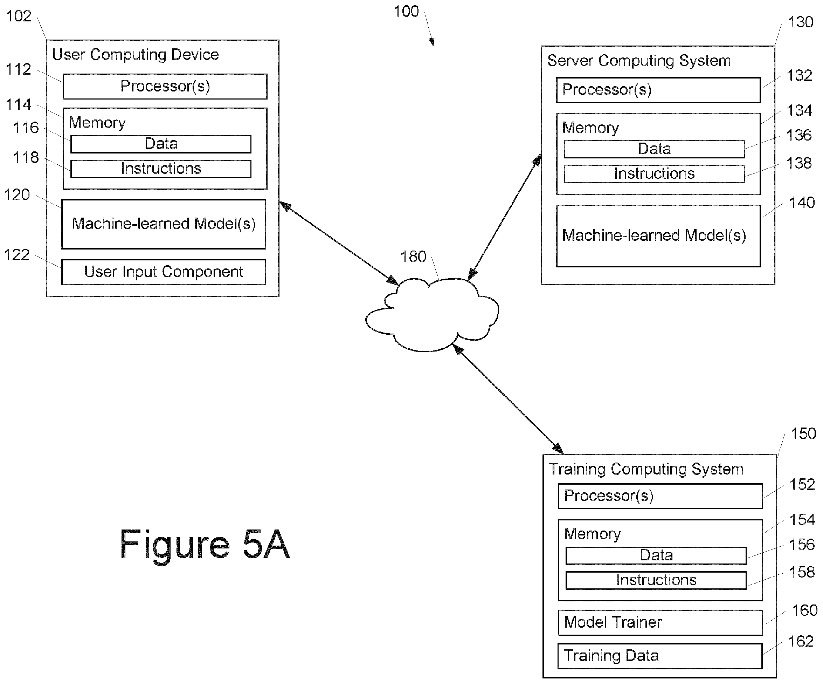

Figure 5A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example machine-learned models 120 are discussed with reference to Figures 1-4.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120 (e.g., to perform parallel inference across multiple instances of input).

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service. Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 1-4.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, the training can be performed using an adaptive learning rate optimization algorithm, such as the Adam optimizer. For finetuning a pre-trained model, a relatively small learning rate (e.g., a learning rate of approximately 3.3 x 10⁻⁵) can be a parameter for achieving robust performance. When training linear probes for a self-ensemble, the parameters of the shared machine-learned model backbone can be held frozen while each linear probe is trained for a small number of iterations, such as a single epoch.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The machine-learned models described in this specification may be used in a variety of tasks, applications, and/or use cases.

In some implementations, the input to the machine-learned model(s) of the present disclosure can be image data. The machine-learned model(s) can process the image data to generate an output. As an example, the machine-learned model(s) can process the image data to generate an image recognition output (e.g., a recognition of the image data, a latent embedding of the image data, an encoded representation of the image data, a hash of the image data, etc.). As another example, the machine-learned model(s) can process the image data to generate an image segmentation output. As another example, the machine-learned model(s) can process the image data to generate an image classification output. As another example, the machine-learned model(s) can process the image data to generate an image data modification output (e.g., an alteration of the image data, etc.). As another example, the machine-learned model(s) can process the image data to generate an encoded image data output (e.g., an encoded and/or compressed representation of the image data, etc.). As another example, the machine-learned model(s) can process the image data to generate an upscaled image data output. As another example, the machine-learned model(s) can process the image data to generate a prediction output.

In some implementations, the input to the machine-learned model(s) of the present disclosure can be text or natural language data. The machine-learned model(s) can process the text or natural language data to generate an output. As an example, the machine-learned model(s) can process the natural language data to generate a language encoding output. As another example, the machine-learned model(s) can process the text or natural language data to generate a latent text embedding output. As another example, the machine-learned model(s) can process the text or natural language data to generate a translation output. As another example, the machine-learned model(s) can process the text or natural language data to generate a classification output. As another example, the machine-learned model(s) can process the text or natural language data to generate a textual segmentation output. As another example, the machine-learned model(s) can process the text or natural language data to generate a semantic intent output. As another example, the machine-learned model(s) can process the text or natural language data to generate an upscaled text or natural language output (e.g., text or natural language data that is higher quality than the input text or natural language, etc.). As another example, the machine-learned model(s) can process the text or natural language data to generate a prediction output.

In some implementations, the input to the machine-learned model(s) of the present disclosure can be speech data. The machine-learned model(s) can process the speech data to generate an output. As an example, the machine-learned model(s) can process the speech data to generate a speech recognition output. As another example, the machine-learned model(s) can process the speech data to generate a speech translation output. As another example, the machine-learned model(s) can process the speech data to generate a latent embedding output. As another example, the machine-learned model(s) can process the speech data to generate an encoded speech output (e.g., an encoded and/or compressed representation of the speech data, etc.). As another example, the machine-learned model(s) can process the speech data to generate an upscaled speech output (e.g., speech data that is higher quality than the input speech data, etc.). As another example, the machine-learned model(s) can process the speech data to generate a textual representation output (e.g., a textual representation of the input speech data, etc.). As another example, the machine-learned model(s) can process the speech data to generate a prediction output.

In some implementations, the input to the machine-learned model(s) of the present disclosure can be latent encoding data (e.g., a latent space representation of an input, etc.). The machine-learned model(s) can process the latent encoding data to generate an output. As an example, the machine-learned model(s) can process the latent encoding data to generate a recognition output. As another example, the machine-learned model(s) can process the latent encoding data to generate a reconstruction output. As another example, the machine-learned model(s) can process the latent encoding data to generate a search output. As another example, the machine-learned model(s) can process the latent encoding data to generate a reclustering output. As another example, the machine-learned model(s) can process the latent encoding data to generate a prediction output.

In some implementations, the input to the machine-learned model(s) of the present disclosure can be statistical data. Statistical data can be, represent, or otherwise include data computed and/or calculated from some other data source. The machine-learned model(s) can process the statistical data to generate an output. As an example, the machine-learned model(s) can process the statistical data to generate a recognition output. As another example, the machine-learned model(s) can process the statistical data to generate a prediction output. As another example, the machine-learned model(s) can process the statistical data to generate a classification output. As another example, the machine-learned model(s) can process the statistical data to generate a segmentation output. As another example, the machine-learned model(s) can process the statistical data to generate a visualization output. As another example, the machine-learned model(s) can process the statistical data to generate a diagnostic output.

In some implementations, the input to the machine-learned model(s) of the present disclosure can be sensor data. The machine-learned model(s) can process the sensor data to generate an output. As an example, the machine-learned model(s) can process the sensor data to generate a recognition output. As another example, the machine-learned model(s) can process the sensor data to generate a prediction output. As another example, the machine-learned model(s) can process the sensor data to generate a classification output. As another example, the machine-learned model(s) can process the sensor data to generate a segmentation output. As another example, the machine-learned model(s) can process the sensor data to generate a visualization output. As another example, the machine-learned model(s) can process the sensor data to generate a diagnostic output. As another example, the machine-learned model(s) can process the sensor data to generate a detection output.

In some cases, the machine-learned model(s) can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data).

In some cases, the input includes visual data and the task is a computer vision task. In some cases, the input includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

Figure 5A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

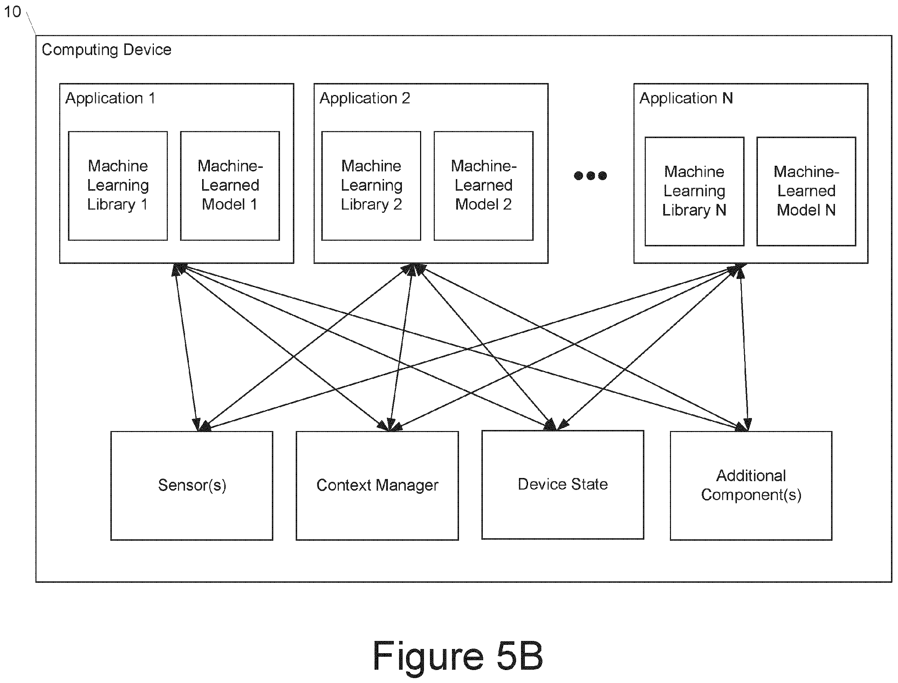

Figure 5B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 5B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

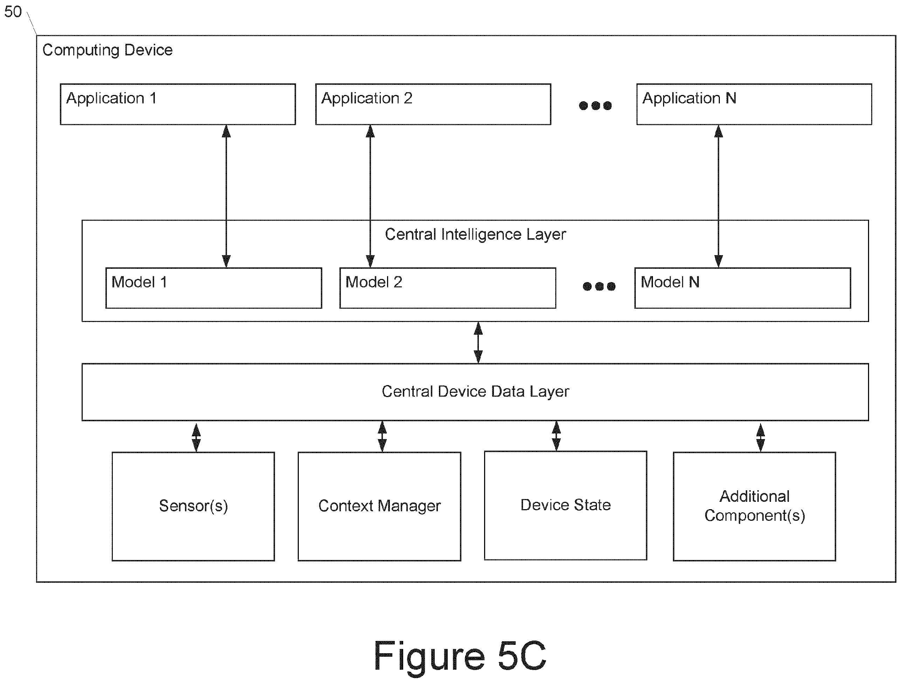

Figure 5C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 5C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 5C, the central device data layer can communicate with a number of other components of the computing device, such as, for example, one or more sensors, a context manager, a device state component, and/or additional components. In some implementations, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

Innovative aspects of this disclosure are also set out in the following numbered clauses, which are not claims:
1. A computer-implemented method for improved robustness against adversarial attacks, the method comprising:
   obtaining, by a computing system comprising one or more computing devices, an input image, wherein the input image comprises a first tensor of image data having first and second values for first and second spatial dimensions and a third value for a channel dimension;
   generating, by the computing system, a second tensor of image data from the input image, wherein the second tensor of image data has the first and second values for the first and second spatial dimensions and a fourth value for the channel dimension, wherein the fourth value is greater than the third value, and wherein generating the second tensor of image data comprises:
      generating, by the computing system, one or more augmented versions of the input image; and
      stacking, by the computing system, the one or more augmented versions of the input image in the channel dimension; and
   processing, by the computing system, the second tensor of image data with a machine-learned model to generate an output from the machine-learned model.
2. The computer-implemented method of clause 1, wherein stacking, by the computing system, the one or more augmented versions of the input image in the channel dimension comprises appending, by the computing system, the one or more augmented versions of the input image to the first tensor of image data along the channel dimension.
3. The computer-implemented method of clause 1, wherein the second tensor of image data excludes the first tensor of image data such that the original input image is not included in the second tensor of image data.
4. The computer-implemented method of any preceding clause, wherein generating, by the computing system, the one or more augmented versions of the input image comprises generating, by the computing system, one or more degraded versions of the input image.
5. The computer-implemented method of clause 4, wherein generating, by the computing system, the one or more degraded versions of the input image comprises:
   decreasing, by the computing system, a resolution of the input image to generate a reduced-resolution version of the input image; and
   rescaling, by the computing system, the reduced-resolution version of the input image to have the first and second values for the first and second spatial dimensions.
6. The computer-implemented method of clause 4, wherein generating, by the computing system, the one or more degraded versions of the input image comprises iteratively decreasing, by the computing system, a resolution of the input image and rescaling the result for a plurality of steps to generate a plurality of progressively-degraded versions of the input image.
7. The computer-implemented method of clause 4, wherein generating, by the computing system, the one or more degraded versions of the input image comprises blurring, by the computing system, the input image.
8. The computer-implemented method of clause 4, wherein generating, by the computing system, the one or more degraded versions of the input image comprises adding, by the computing system, stochastic noise to the input image.
9. The computer-implemented method of clause 4, wherein generating, by the computing system, the one or more degraded versions of the input image comprises adding, by the computing system, stochastic jitter to the input image.
10. The computer-implemented method of clause 4, wherein generating, by the computing system, the one or more degraded versions of the input image comprises adding, by the computing system, a random change in contrast to the input image.
11. The computer-implemented method of clause 4, wherein generating, by the computing system, the one or more degraded versions of the input image comprises adding, by the computing system, a random shift in color-grayscale to the input image.
12. A computing system with improved robustness against adversarial attacks, the computing system comprising:
   one or more processors; and
   one or more non-transitory computer-readable media that collectively store instructions that, when executed by the one or more processors, cause the computing system to perform operations, the operations comprising:
      obtaining a plurality of first sets of scores respectively generated by a plurality of machine-learned models for an input, wherein each first set of scores comprises a plurality of values respectively for a plurality of classes;
      subtracting, from each first set of scores on a per-model basis, a respective maximum score value from that first set of scores to obtain a plurality of second sets of scores;
      subtracting, from all of the second set of scores on a per-class basis, a respective maximum score value from all of the second set of scores for that class to obtain a plurality of third sets of scores;
      generating an output set of scores from the plurality of third sets of scores; and
      generating an ensemble prediction based on the output set of scores.
13. The computing system of clause 12, wherein each of the sets of scores comprises logit scores.
14. The computing system of any of clauses 12-13, wherein generating the output set of scores from the plurality of third sets of scores comprises selecting, on a per-class basis, a median score value for each class from all of the third sets of scores for inclusion in the output set of scores.
15. The computing system of any of clauses 12-13, wherein generating the output set of scores from the plurality of third sets of scores comprises selecting, on a per-class basis, a k-th highest score value for each class from all of the third sets of scores for inclusion in the output set of scores.
16. The computing system of clause 15, wherein the k-th highest score value comprises the second highest score value.
17. The computing system of any of clauses 12-16, wherein the input comprises the second tensor of image data described in any of clauses 1-11.
18. The computing system of any of clauses 12-17, wherein the plurality of machine-learned models comprises a plurality of different checkpoints of a machine-learned model.
19. One or more non-transitory computer-readable media that collectively store computer-readable instructions for performing computer operations, the computer operations comprising:
   obtaining a plurality of first sets of scores respectively generated for an input by a plurality of intermediate layers of a shared machine-learned model, wherein each first set of scores comprises a plurality of values respectively for a plurality of classes;
   aggregating the plurality of first sets of scores to generate an output set of scores; and
   generating a self-ensemble prediction based on the output set of scores.
20. The one or more non-transitory computer-readable media of clause 19, wherein aggregating the plurality of first sets of scores to generate an output set of scores comprises:
   subtracting, from each first set of scores on a per-model basis, a respective maximum score value from that first set of scores to obtain a plurality of second sets of scores;
   subtracting, from all of the second set of scores on a per-class basis, a respective maximum score value from all of the second set of scores for that class to obtain a plurality of third sets of scores;
   generating an output set of scores from the plurality of third sets of scores.
21. The one or more non-transitory computer-readable media of clause 20, wherein generating the output set of scores from the plurality of third sets of scores comprises selecting, on a per-class basis, a median score value for each class from all of the third sets of scores for inclusion in the output set of scores.
22. The one or more non-transitory computer-readable media of clause 20, wherein generating the output set of scores from the plurality of third sets of scores comprises selecting, on a per-class basis, a k-th highest score value for each class from all of the third sets of scores for inclusion in the output set of scores.
23. The one or more non-transitory computer-readable media of clause 22, wherein the k-th highest score value comprises the second highest score value.
24. The one or more non-transitory computer-readable media of any of clauses 19-23, wherein the input comprises the second tensor of image data described in any of clauses 1-11.
25. The one or more non-transitory computer-readable media of any of clauses 19-24, wherein the plurality of first sets of scores comprises a plurality of sets of logit scores generated by respective linear probes and wherein the output set of scores comprises a set of logit scores.

## Claims

1. A computer-implemented method for improved robustness against adversarial attacks, the method comprising:
obtaining, by a computing system comprising one or more computing devices, an input image, wherein the input image comprises a first tensor of image data having first and second values for first and second spatial dimensions and a third value for a channel dimension;
generating, by the computing system, a second tensor of image data from the input image, wherein the second tensor of image data has the first and second values for the first and second spatial dimensions and a fourth value for the channel dimension, wherein the fourth value is greater than the third value, and wherein generating the second tensor of image data comprises:
generating, by the computing system, one or more augmented versions of the input image; and
stacking, by the computing system, the one or more augmented versions of the input image in the channel dimension; and
processing, by the computing system, the second tensor of image data with a machine-learned model to generate an output from the machine-learned model.

2. The computer-implemented method of claim 1, wherein stacking, by the computing system, the one or more augmented versions of the input image in the channel dimension comprises appending, by the computing system, the one or more augmented versions of the input image to the first tensor of image data along the channel dimension.

3. The computer-implemented method of claim 1, wherein the second tensor of image data excludes the first tensor of image data such that the original input image is not included in the second tensor of image data.

4. The computer-implemented method of any preceding claim, wherein generating, by the computing system, the one or more augmented versions of the input image comprises generating, by the computing system, one or more degraded versions of the input image.

5. The computer-implemented method of claim 4, wherein generating, by the computing system, the one or more degraded versions of the input image comprises:
decreasing, by the computing system, a resolution of the input image to generate a reduced-resolution version of the input image; and
rescaling, by the computing system, the reduced-resolution version of the input image to have the first and second values for the first and second spatial dimensions.

6. The computer-implemented method of claim 4, wherein generating, by the computing system, the one or more degraded versions of the input image comprises iteratively decreasing, by the computing system, a resolution of the input image and rescaling the result for a plurality of steps to generate a plurality of progressively-degraded versions of the input image.

7. The computer-implemented method of claim 4, wherein generating, by the computing system, the one or more degraded versions of the input image comprises one or more of:
blurring, by the computing system, the input image;
adding, by the computing system, stochastic noise to the input image;
adding, by the computing system, stochastic jitter to the input image;
adding, by the computing system, a random change in contrast to the input image; and
adding, by the computing system, a random shift in color-grayscale to the input image.

8. A computing system with improved robustness against adversarial attacks, the computing system comprising:
one or more processors; and
one or more non-transitory computer-readable media that collectively store instructions that, when executed by the one or more processors, cause the computing system to perform operations, the operations comprising:
obtaining a plurality of first sets of scores respectively generated by a plurality of machine-learned models for an input, wherein each first set of scores comprises a plurality of values respectively for a plurality of classes;
subtracting, from each first set of scores on a per-model basis, a respective maximum score value from that first set of scores to obtain a plurality of second sets of scores;
subtracting, from all of the second set of scores on a per-class basis, a respective maximum score value from all of the second set of scores for that class to obtain a plurality of third sets of scores;
generating an output set of scores from the plurality of third sets of scores; and
generating an ensemble prediction based on the output set of scores.

9. The computing system of claim 8, wherein:
each of the sets of scores comprises logit scores; and/or
generating the output set of scores from the plurality of third sets of scores comprises selecting, on a per-class basis, a median score value for each class from all of the third sets of scores for inclusion in the output set of scores.

10. The computing system of any of claims 8-9, wherein:
(i) the plurality of machine-learned models comprises a plurality of different checkpoints of a machine-learned model; and/or
(ii) generating the output set of scores from the plurality of third sets of scores comprises selecting, on a per-class basis, a k-th highest score value for each class from all of the third sets of scores for inclusion in the output set of scores, and optionally, wherein the k-th highest score value comprises the second highest score value.

11. The computing system of any of claims 8-10, wherein the input comprises the second tensor of image data described in any of claims 1-7.

12. One or more non-transitory computer-readable media that collectively store computer-readable instructions for performing computer operations, the computer operations comprising:
obtaining a plurality of first sets of scores respectively generated for an input by a plurality of intermediate layers of a shared machine-learned model, wherein each first set of scores comprises a plurality of values respectively for a plurality of classes;
aggregating the plurality of first sets of scores to generate an output set of scores; and
generating a self-ensemble prediction based on the output set of scores.

13. The one or more non-transitory computer-readable media of claim 12, wherein aggregating the plurality of first sets of scores to generate an output set of scores comprises:
subtracting, from each first set of scores on a per-model basis, a respective maximum score value from that first set of scores to obtain a plurality of second sets of scores;
subtracting, from all of the second set of scores on a per-class basis, a respective maximum score value from all of the second set of scores for that class to obtain a plurality of third sets of scores;
generating an output set of scores from the plurality of third sets of scores; and

14. The one or more non-transitory computer-readable media of claim 13, wherein:
(i) generating the output set of scores from the plurality of third sets of scores comprises selecting, on a per-class basis, a median score value for each class from all of the third sets of scores for inclusion in the output set of scores; or
(ii) generating the output set of scores from the plurality of third sets of scores comprises selecting, on a per-class basis, a k-th highest score value for each class from all of the third sets of scores for inclusion in the output set of scores, and optionally, the k-th highest score value comprises the second highest score value.

15. The one or more non-transitory computer-readable media of any of claims 12-14, wherein:
the input comprises the second tensor of image data described in any of claims 1-7; and/or
the plurality of first sets of scores comprises a plurality of sets of logit scores generated by respective linear probes and wherein the output set of scores comprises a set of logit scores.
